# EUROPÄISCHE PATENTSCHRIFT

(11) **EP 0 663 055 B1**
(45) Veröffentlichungstag und Bekanntmachung des Hinweises auf die Patenterteilung: **20.01.1999**
(21) Anmeldenummer: 94917540.0
(22) Anmeldetag: 23.06.1994
(51) Int. Cl.: F23J 15/00, B01J 19/30

(54) **FÜLLKÖRPER**
PACKING BODY
CORPS DE REMPLISSAGE

(30) Priorität: 29.07.1993 CH 2295/93
(43) Veröffentlichungstag der Anmeldung: 19.07.1995
(73) Patentinhaber: Wunsch, Horst, CH-8597 Landschlacht (CH)
(72) Erfinder: Wunsch, Horst, CH-8597 Landschlacht (CH)
(74) Vertreter: Schwabe - Sandmair - Marx
(86) Internationale Anmeldenummer: CH9400125
(87) Internationale Veröffentlichungsnummer: WO9504246

(56) Entgegenhaltungen:
- EP-A- 0 215 558
- WO-A-89/05688
- DATABASE WPI Section PQ, Week 8916, 31. Mai 1989 Derwent Publications Ltd., London, GB; Class Q78, AN 89-121153 & SU,A,1 430 717 (VODGEO WATER SUPPLY) 15. Oktober 1988
- PATENT ABSTRACTS OF JAPAN vol. 14, no. 330 (C-0741) 16. Juli 1990 & JP,A,02 119 931 (SHINKO PANTEC) 8. Mai 1990

## Beschreibung

Die Erfindung betrifft einen Füllkörper gemäß dem Oberbegriff des Anspruchs 1.

Um der steigenden Verschmutzung der Luft Einhalt zu gebieten, sucht man bei allen Verbrennungsprozessen nach Möglichkeiten zur Reduktion der Schadstoffemissionen und zur Erhöhung des Wirkungsgrades.

Dies gilt auch für Heizanlagen in Gebäuden. Gebäude werden meistens durch die Verbrennung von Erdöl, Erdgas oder Kohle geheizt. Das dabei entstehende Kohlendioxid verursacht neben anderen Gasen den Treibhauseffekt. Mit der modernen Technik des kalten, nassen, kondensierenden Kamins hat man eine Möglichkeit gefunden, die Schadstoffemission von Heizanlagen deutlich zu reduzieren. Diese Technik besteht darin, dass die Betriebstemperatur des Heizkessels bei der Brennwerttechnik auf ca. 30-40°C und bei der Niedertemperaturtechnik bis auf ca.90-140° abgesenkt wird. Das Abgas kühlt sich dann im Kaminrohr soweit ab, bis ein grosser Teil des Abgases, insbesondere der Wasserdampf, aber auch Schwefelsäure-und Salzsäuregase, kondensiert.

Durch diese Technik kann der Wirkungsgrad der Heizung wesentlich verbessert werden. Ein grosser Teil der Wärmeenergie, inklusive der Kondensationswärme des kondensierten Gases, lässt sich zurückgewinnen.

Bei Flüssigkeiten wirken zwischen den Molekülen Kohäsionskräfte. Führt man der Flüssigkeit Energie zu, wird die Bewegung (Brownsche Bewegung) der Moleküle immer heftiger, bis schliesslich die Kohäsionskräfte überwunden werden. Der vorher flüssige Stoff geht in den gasförmigen Aggregatzustand über. In diesem Zustand bewegen sich die Moleküle des Stoffes fast völlig frei im Raum und verteilen sich folglich auf ein wesentlich grösseres Raumvolumen als im flüssigen Aggregatzustand. Für den Phasenübergang vom flüssigen in den gasförmigen Zustand muss eine bestimmte stoffspezifische Umwandlungswärme aufgewendet werden. Sie wird für die Überwindung der Kohäsionskräfte benötigt.

Umgekehrt wird beim Übergang von Stoffen vom gasförmigen in den flüssigen Aggregatzustand die entsprechende Energiemenge wieder frei. Diese freiwerdende Energiemenge wird Kondensationswärme genannt.

Bei der Technik des nassen, kalten,-kondensierenden Kamins entsteht im Kamin Kondensat. Bei der Kondensierung wird dem Rauchgas ein grosser Teil der Kondensationswärme entzogen und im Kamin zurückgehalten. Zusätzlich hat derjenige Teil des Abgases, welcher das Kamin verlässt eine viel niedrigere Temperatur als bei den herkömmlichen heissen Kaminen. Dadurch gelangt ebenfalls weniger Wärmeenergie in die Atmosphäre.

Ein weiterer Vorteil dieser Technik liegt in der Reduktion der Wasserdampf- und Säureemission. Wasserdampf, Schwefelsäuregas (Schwefeloxide) und Salzsäuregas sind umweltrelevante Stoffe. Wasserdampf führt in grossen Mengen zur Klimaerwärmung. Die Säuregase sind gesundheitsgefährdend und belasten auch die Gewässer, die Böden und die Vegetation. Die Technik des kalten, nassen, kondensierenden Kamins leistet folglich einen wesentlichen Beitrag zum Umweltschutz. Die Reduktion der Gasemission und des Energieverlustes ist um so stärker, je mehr Kondensat im Kamin entsteht.

Gemäß EP-A-O 215 558 ist ein Füllkörper für Trennsäulen etc. für chemische Anlagen und dergleichen bekannt. Dieser besteht aus einem sich längserstreckenden zentralen Kern von dem sich eine Vielzahl von Netzelementen radial erstrecken. Die Netzelemente fluchten im wesentlichen axial mit dem Kern und werden aus einer Vielzahl offener Zelleneinheiten gebildet. Der Füllkörper weist jedoch keinen Neutralisationsbereiche bzw. -körper oder Adsorbtionsbereiche auf.

Gemäß JP 2119931 ist ein Füllkörper bekannt, der aus ringförmigen Abschnitten besteht, die aus dem Gesichtspunkt der Massenfertigung heraus in einer bestimmten Weise hergestellt und angeordnet werden soll.

Gemäß WO-A-89/05688 ist ein kugelförmiger Füllkörper aus Kunststoff für Stoff- und Wärmeaustauschkolonnen bekannt, dessen Mantel aus parallelen Ringstäben und meridianartig verlaufenden Gitterstäben gitterwerkartig aufgebaut ist. Um den Füllkörper für verschiedene Betriebsbedingungen geeignet und anpaßbar zu machen, besteht der Füllkörper aus zwei Halbkugeln, die durch Kugelelemente miteinander verbunden sind. Der Einsatz von Neutralisationsmitteln bzw. Adsorbtionsmitteln in Verbindung mit einem entsprechenden Füllkörper wird jedoch nicht gelehrt.

Man war daher auf der Suche nach Vorrichtungen oder Verfahren, mit deren Hilfe die Kondensatmenge pro Gasvolumen vergrössert werden kann.

Zu den bekannten Vorrichtungen gehören Füllkörper, welche die Oberfläche, mit der die gasförmigen oder flüssigen Stoffe in Berührung kommen, vergrössern.
Gemäss dem heutigen Stand der Technik ist es jedoch nicht bekannt, solche Füllkörper in Kaminen von Gebäudeheizanlagen einzusetzen.

Die Erfindung stellt sich nun die Aufgabe, einen Füllkörper zu finden, welcher sich für den Einbau in die dünnen Kaminrohre eignet und mit dessen Hilfe die pro Volumeneinheit eines Gases entstehende Kondensatmenge vergrössert und das saure Kondensat neutralisiert werden kann.

Die Aufgabe wird bei einer Vorrichtung mit den Merkmalen des Oberbegriffs des Anspruchs 1 durch die Merkmale des kennzeichnenden Teils des Patentanspruches 1 gelöst. In den abhängigen Ansprüchen 2 bis 17 sind bevorzugte und vorteilhafte weiter bildungen der erfindungsgemäßen Vorrichtung angegeben.

Gegenstand der Erfindung ist ein Kamin, welcher zur Erhöhung der Kondensatmenge mit einer Vielzahl von Füllkörpern gefüllt ist. Es werden vorzugsweise die vorgeschlagenen Füllkörper verwendet, welche speziell für den Einsatz in Kaminrohren geeignet sind. Diese Füllkörper sind halbkugelförmig. Je zwei halbkugelförmige Füllkörper können mit Klipsen zu einer Kugel verbunden werden. Der Füllkörper ist in zwei unterschiedlichen Ausbildungsarten verwirklicht, welche sich in der Anordnung der Klipse und der Verbindungsvorrichtungen unterscheiden, mit deren Hilfe die kugelförmigen Füllkörperpaare aufeinandergesteckt werden können. Der Füllkörper ist als Gitterkonstruktion verwirklicht. In seinem Innenraum werden zur Neutralisierung des sauren Kondensats Körper aus Marmor, Kalkstein oder säurefester Keramik angeordnet sein. Die Erfindung ist unter anderem in den Zeichnungen erläutert. Es zeigen:
- Fig. 1: Längsschnitt durch einen Kaminrohrabschnitt mit einer Vielzahl eingesetzter, aufeinandergesteckter Füllkörper mit Neutralisationskörper
- Fig. 2: eine der Radialflächen eines Füllkörpers der ersten Ausbildungsart mit Neutralisationskörper
- Fig. 3: eine der Radialflächen eines Füllkörpers der zweiten Ausbildungsart mit Neutralisationskörper
- Fig. 4: Querschnitt durch einen Stab der Gitterkonstruktion
- Fig. 5: detaillierte, dreidimensionale Darstellung einer Vorrichtung zur Verbindung zweier Füllkörperkugeln
- Fig. 6: Querschnitt durch die äussersten Ringe zweier verbundener Füllkörper im Bereich eines Verbindungsklips

Der Innenraum eines Kamins wird mit Füllkörpern 1 gefüllt. Der Kamin kann unterschiedlich ausgebildet sein. Er kann zum Beispiel eine gemauerte, aussenliegende Kaminwandung aufweisen, in deren Innenraum ein dünneres Kaminrohr 2 verläuft, durch welches das Rauchgas fliesst. In diesem Fall wird nur das innenliegende Kaminrohr 2 mit Füllkörpern 1 gefüllt. Der Kamin kann auch lediglich aus einem Kaminrohr 2 bestehen. Das ist vor allem bei Aussenmontagen von Kaminen der Fall.

Der Kamin eignet sich vor allem für die Technik des kalten, nassen, kondensierenden Kamins.

Zum Füllen des Kamins wird vorzugsweise der im folgenden beschriebene Füllkörper 1 verwendet, welcher sich speziell für dünne Kaminrohre 2 eignet.

Der vorgeschlagene Füllkörper 1 hat, wie bereits erwähnt, die Form einer Halbkugel. Er ist als Gitterkonstruktion verwirklicht und in erster Linie für den Einbau in Kaminrohre 2 gedacht. Er eignet sich aber auch allgemein für Abgasleitungen und andere Rohrleitungen sowie für chemische Reaktoren oder Kolonnen, Hochkamine, Grosskamine und Filter von Müllverbrennungsanlagen.

Im folgenden wird nur noch der Begriff Kaminrohre verwendet. Dieser Begriff soll auch alle anderen möglichen Kondensationsgefässe wie Rohrleitungen, chemische Reaktoren und Kolonnen umfassen.

Ein Kaminrohr 2 nimmt eine Vielzahl solcher Füllkörper 1 auf.

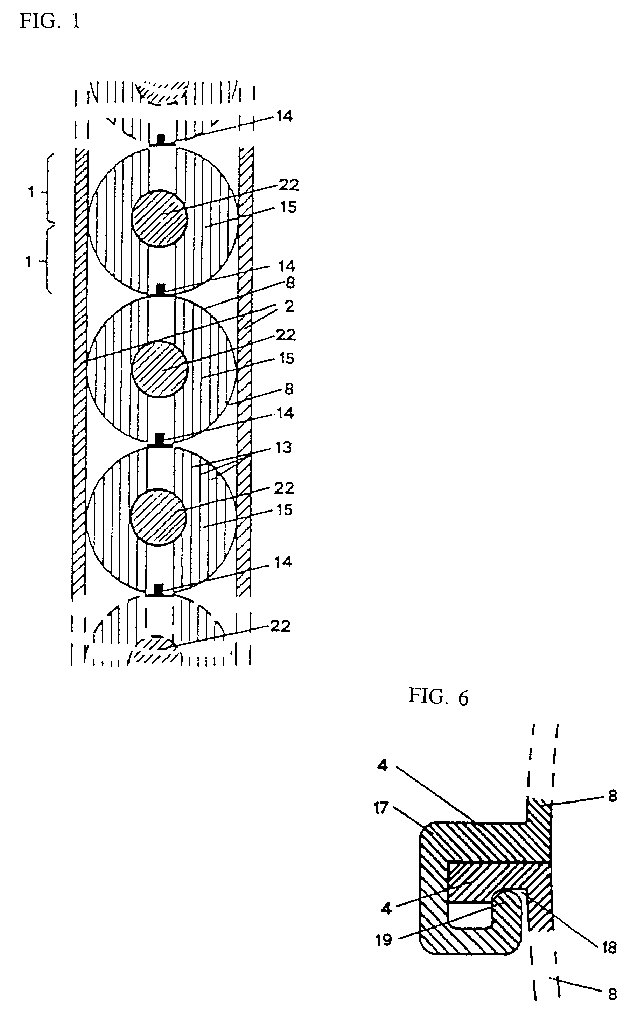

Für den Einbau der Füllkörper 1 in ein Kaminrohr 2 gibt es grundsätzlich zwei Möglichkeiten:
Bei der ersten Möglichkeit werden die Füllkörper 1 für den Einbau paarweise zu Kugeln 15 zusammengefügt. Die einzelnen Kugeln 15 werden dann aufeinandergesteckt und formen im Kaminrohr 2 eine Füllkörpersäule (vgl. Fig. 1). Die zweite Möglichkeit besteht darin, die Füllkörper 1 als loses Schüttgut zu verwenden. Die Füllkörper 1 werden in diesem Falle lose ins Kaminrohr 2 hineingeschüttet.

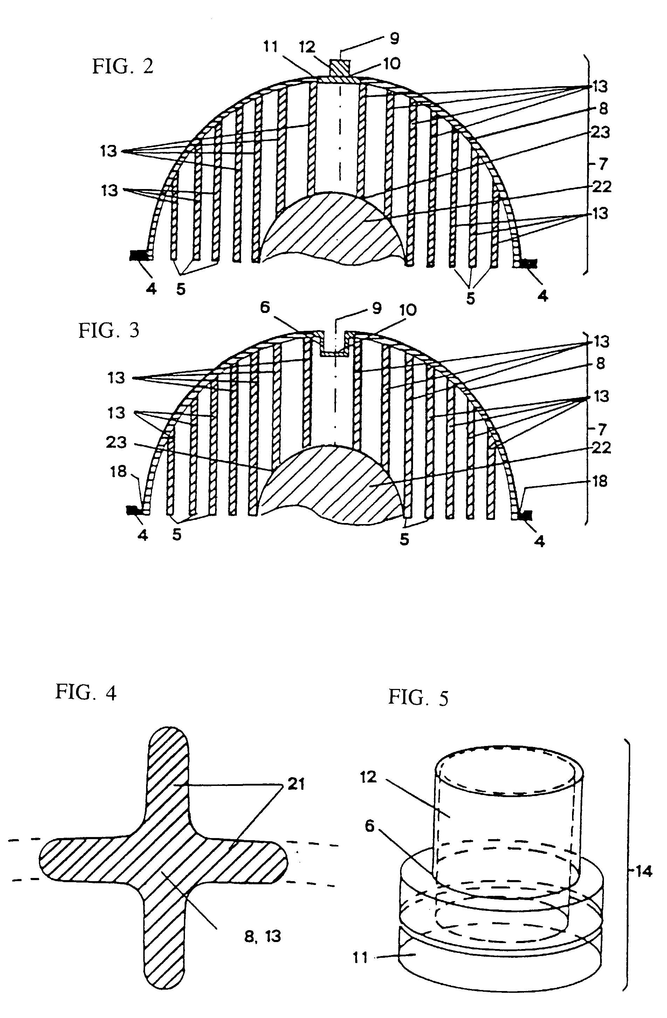

Der Füllkörper 1 verfügt über einen Neutralisationskörper 22 (vgl. Fig. 1 und 2).

Die Neutralisationskörper 22 sind kugelförmig. Ihr Durchmesser entspricht etwa einem Drittel des Füllkörperdurchmessers. Die Neutralisationskörper bestehen aus Marmor, Kalkstein oder säurefester Keramik. Sie können die Form eines Presslings aus Marmormehl haben oder aber aus einem kompakten Steinstück bestehen.

Falls die Rauchgase Lauge enthalten, ist es auch möglich, die Neutralisationskörper 22 und/oder die Füllkörper 1 aus einer sauren Substanz oder aus einem laugenbeständigen Material, wie z.B. ECTFE oder Acetalharz, zu verwenden.

Ein Füllkörper 1 verfügt über eine runde Grundfläche 3. Beim Füllkörper 1 mit dem Neutralisationskörper 22 ist die Grundfläche 3 in ihrem mittleren Bereich halbkugelförmig nach innen gebogen. Dadurch entsteht ein halbkugelförmiger Raum, welcher die Hälfte eines Neutralisationskörper 22 aufnehmen kann (vgl. Fig. 2).

Die Grundfläche 3 besteht aus mehreren kreisförmigen Ringen 4, 5. Die Ringe 4, 5 sind konzentrisch, in gleichen Abständen angeordnet (vgl. Fig. 2,3). Beim Füllkörper 1 mit einem Neutralisationskörper 22 sind die innersten Ringe 5 bezüglich der weiter aussen liegenden Ringe 4, 5 stufenweise in der Richtung der Verbindungsvorrichtung 14 versetzt. Dadurch wird der oben erwähnte halbkugelförmige Raum geformt (vgl. Fig. 2,3)

Auf dem äussersten Ring 4 der Grundfläche 3 steht eine Vielzahl von halbkreisförmigen Rippen 8. Die Anzahl der Rippen 8 eines Füllkörpers kann beliebig gewählt werden. Die halbkreisförmigen Rippen 8 sind regelmässig auf dem Umfang der runden Grundfläche 3 verteilt. Ihre Fusspunkte bilden also ein regelmässiges Vieleck. Die Scheitelpunkte 10 der halbkreisförmigen Rippen 8 liegen auf der gedachten Längsachse 9 des Füllkörpers 1. Die halbkreisförmigen Rippen 8 sind aus Stäben mit kreuzförmigem Querschnitt gefertigt (vgl. Fig. 5).

Beim Füllkörper 1 der ersten Ausbildungsart sind die halbkreisförmigen Rippen 8 an ihrem Scheitelpunkt 10 durch eine runde Scheibe 11 unterbrochen. Auf derjenigen Seite der Scheibe 11, welche dem Füllkörperinnenraum abgewandt ist, ist ein zylindrischer Bolzen 12 angeordnet. Er steht rechtwinklig auf der Scheibe 11. Der Mittelpunkt der runden Scheibe 11 und die Längsachse des Bolzens 12 liegen auf der gedachten Füllkörperlängsachse 9 (vgl. Fig. 2).

Beim Füllkörper 1 der zweiten Ausbildungsart sind die halbkreisförmigen Rippen 8 an ihrem Scheitelpunkt 10 durch ein zylindrisches, becherförmiges Teil 6 unterbrochen. Die Längsachse des becherförmigen Teils 6 liegt auf der gedachten Längsachse 9 des Füllkörpers 1. Der Innendurchmesser des becherförmigen Teils 6 entspricht dem Aussendurchmessers des zylindrischen Bolzens 12.

Das becherförmige Teil 6 und die runde Scheibe 11 mit dem zylindrischen Bolzen 12 bilden die Verbindungsvorrichtung 14, welche das Aufeinanderstecken der Füllkörperkugeln 15 ermöglicht.

Jede halbkreisförmige Rippe 8 bildet die obere Begrenzung einer halbkreisförmigen, radial verlaufenden Fläche 7. Beim Füllkörper 1 mit einem Neutralisationskörper 22 weisen diese Radialflächen 7 in der Mitte ihrer geraden Seite eine halbkreisförmige Aussparung auf. In den Radialflächen 7 sind vertikale Streben 13 angeordnet. Der Fusspunkt jeder vertikalen Strebe 13 liegt auf einem der inneren Ringe 5 der Grundfläche 3.

Die vertikalen Streben 13 sind aus Stäben mit kreuzförmigem Querschnitt gefertigt (vgl. Fig. 5).

Damit die Füllkörper 1 bei der Herstellung problemlos entformbar sind, entspricht die Breite der inneren Ringe 5 der Breite der Arme 21 des kreuzförmigen Strebenquerschnittes (vgl. Fig. 4).

Oben sind die vertikalen Streben 13 an den halbkreisförmigen Rippen 8 befestigt.

Jede Radialfläche 7 weist vorzugsweise vierzehn vertikale Streben 13 auf. Die Anzahl der inneren Ringe 5 der Grundfläche 3 entspricht der Anzahl der vertikalen Streben 13. In den Figuren 2 und 3 ist je eine Radialfläche 7 mit vierzehn vertikalen Streben 13 dargestellt.

Die vertikalen Streben 13 einer Radialflächenhälfte sind entsprechend den Ringen 4, 5 in regelmässigen Abständen angeordnet. Sie verlaufen rechtwinklig zu den Ringen 4, 5.

Der Innenraum eines Kaminrohres 2 wird vollständig mit Füllkörpern 1 aufgefüllt.

Die Füllkörper 1 können dafür zuerst paarweise zu Kugeln 15 zusammengesteckt werden. Man nimmt dafür je einen Füllkörper 1 beider Ausbildungsarten und legt ihre Grundflächen 3 derartig aufeinander, dass sie sich vollständig decken. Bei den Vorher wird jedoch noch ein kugelförmiger Neutralisationskörper 22 in den halbkugelförmigen Raum eines der beiden Füllkörper 1 gelegt. Durch das Aufeinanderlegen beider Füllkörper 1 fügen sich die halbkugelförmigen Räume beider Füllkörper 1 zu einem kugelförmigen Aufnahmeraum 23 zusammen, in welchem der Neutralisationskörper 22 angeordnet ist (vgl. Fig. 1).

Danach werden die beiden Füllkörper 1 mit mehreren Verbindungsklipsen 17 miteinander verbunden. Bei einer bevorzugten Ausbildungsart sind die Verbindungsklipse 17 Teil des Füllkörpers 1 der ersten Ausbildungsart und bestehen aus dem gleichen Material wie der Füllkörper 1 selber. Sie sind als Fortsätze des äussersten Ringes 4 der Grundfläche 3 verwirklicht. Die Figur 6 zeigt eine mögliche Formgebung der Verbindungsklipse 17. Der Querschnitt eines Verbindungsklipses 17 ist im wesentlichen U-förmig. Mit einem Schenkel ist der Verbindungsklips 17 mit dem äussersten Grundflächenring 4 verbunden. Der zweite, freie Schenkel des Verbindungsklipses 17 weist an seiner Innenseite eine vorstehende Rille 19 auf. Pro Füllkörper 1 sind vorzugsweise drei Verbindungsklipse 17 vorgesehen.

Damit die Verbindungsklipse 17 am Füllkörper 1 der zweiten Ausbildungsart einrasten können, weist dieser am äussersten Ring 4 seiner runden Grundfläche 3 längs des inneren Ringrandes eine ringförmige, umlaufende Vertiefung 18 auf, deren Breite etwa der halben Breite des äussersten Ringes 4 entspricht (vgl. Fig. 3).

Um zwei Füllkörper 1 miteinander zu verbinden, werden die Verbindungsklipse 17 von aussen her über den äussersten Grundflächenring 4 des Füllkörper 1 der zweiten Ausbildungsart geschoben (vgl. Fig. 6). Die vorstehenden Rillen 19 der Verbindungsklipse 17 rasten in der Endposition in der ringförmigen Vertiefung 18 des äussersten Grundflächenringes 4 ein.

Eine Vielzahl von Füllkörperkugeln 15 werden derartig übereinander in das Kaminrohr 2 eingefügt, dass entweder alle Füllkörper 1 unten an den Kugeln 15 zu liegen kommen (vgl. Fig. 4). Nur so ist es möglich, die Kugeln 15 aneinander zu befestigen, indem jeweils der an einer Kugel 15 vorstehende Bolzen 12 des dazugehörigen Füllkörpers 1 der ersten Ausbildungsart in das an der Aussenfläche der benachbarten Kugel 15 liegende becherförmige Teil 6 des dazugehörigen Füllkörpers 1 der zweiten Ausbildungsart gesteckt wird.

Die Füllkörper 1 brauchen für den Einbau in ein Kaminrohr 2 nicht unbedingt aufeinandergesteckt zu werden. Man kann sie auch als Schüttgut verwenden und sie lose in das Kaminrohr 2 hineinschütten (nicht gezeigt).

Der Radius der Füllkörper 1 ist dem Innenradius des jeweiligen Kaminrohres 2 angepasst.

Als Werkstoff für den Füllkörper 1 wird vorzugsweise der korrosionsfeste und hitzebeständige Kunststoff PVDF oder Polypropylen verwendet.

Saures Kondensat reagiert mit Marmormehl im Neutralisationskörper und wird dadurch neutralisiert. Die Füllkörper 1 dieser Ausbildungsart werden durch das saure Kondensat innerhalb eines bestimmten Zeitraumes zerfressen und können dann auf einfache Art und Weise ersetzt werden.

Der vorgeschlagene Füllkörper 1 wird hergestellt, indem mit einem einzigen Werkzeug (Spritzform) zwei Füllkörper 1 gespritzt werden, welche über ein Filmscharnier miteinander verbunden sind. Das Werkzeug lässt sich relativ einfach mit Hilfe der Funkenerrosionstechnik herstellen.

Die Füllkörper 1 haben folgende Wirkung:
Bei einem Kaminrohr 2 ohne Füllkörper 1 kondensieren die gasförmigen Stoffe, wenn sie mit den relativ kalten Innenwänden des Kaminrohres 2 in Berührung kommen. An der Innenwand des Kaminrohres 2 bilden sich kleinste Kondensattropfen. Diese Kondensattropfen wirken als Kondensationskerne für weitere Gasmoleküle. Die Gasmoleküle treffen auf die Kondensattropfen auf. Beim Zusammenstoss geben sie ihre Bewegungsenergie an die Tropfen ab. Die verringerte Bewegungsenergie bewirkt, dass die aufgetroffenen Gasmoleküle durch die zwischenmolkularen Kohäsionskräfte an den Tropfen festgehalten werden.

Die Füllkörper 1 vergrössern nun die Oberfläche im Kaminrohr 2, an welchen sich kleinste Kondensattropfen, die als Kondensationskerne wirken, anlagern können. Die Oberfläche, an der sich Kondensat bilden kann, und die Kondensatmenge wird dadurch gegenüber Kaminrohren ohne Füllkörper 1 wesentlich vergrössert. Der kreuzförmige Querschnitt der halbkreisförmigen Rippen 8 und der vertikalen Streben 13 der Radialflächen 7, dient der zusätzlichen Vergrösserung der Oberfläche.

Die Füllkörper 1 haben einen weiteren Effekt, welcher die Wärmeabgabe des Rauchgases zusätzlich erhöht: Ein Kaminrohr 2, das mit Füllkörpern 1 gefüllt ist, welche in einer Säule angeordnet sind, weist, bedingt durch die Kugelform der Füllkörper 1, in seinem Zentrum eine höhere Füllmaterialdichte auf als in seiner Peripherie. Dies bewirkt, dass das Rauchgas vermehrt durchwirbelt und zudem nach aussen an die Kaminrohrwand geleitet wird, was die Wärmeabgabe des Rauchgases an das Kaminrohr 2 zusätzlich erhöht.

Durch die Verwendung flexibler Profilrohre mit grosser Oberfläche lässt sich die Kondensatmenge und dadurch der Wirkungsgrad einer Heizung zusätzlich erhöhen.

Ein Kaminrohr 2 mit Füllkörper 1 kühlt im weiteren auch weniger schnell aus als ein Kaminrohr ohne Füllkörper 1. Die vorgeschlagenen Füllkörper 1 bestehen vorzugsweise aus dem Kunststoff PVDF, dessen spezifisches Gewicht etwa doppelt so gross ist wie das spezifische Gewicht von Polyethylen. Entsprechend hoch ist auch seine spezifische Wärmekapazität. In einem warmen Kaminrohr 2 mit Füllkörper 1 ist daher wesentlich mehr Wärmeenergie gespeichert als in einem Kaminrohr ohne Füllkörper 1. Ein Kaminrohr 2 mit Füllkörpern 1 kühlt daher auch weniger schnell aus. Es eignet sich daher wesentlich besser für Aussenmontagen als ein Kaminrohr ohne Füllkörper 1.

Bisher wurden für die Neutralisation des sauren Kondensats Neutralisationsboxen verwendet, welche ein Neutralisationsgranulat enthielten und am Fusse des Kaminrohrs 2 angeordnet waren. Diese Neutralisationsboxen werden nun durch die neutralisierenden Füllkörper 1 ersetzt werden. Bei der Neutralisierung der Schwefelsäure im Kondensat entsteht Kohlendioxid und Gips (Kalziumsulfat).

Die Kugelform der Füllkörper 1 trägt zu einer optimalen Neutralisation bei. Das Kondensat fliesst wegen dieser Kugelform bevorzugt gegen die Mitte des Füllkörpers 1. Der Neutralisationskörper 22 wird dadurch zwangsläufig gut mit dem sauren Kondensat überspühlt.

Bei den vorgeschlagenen Kaminen mit Füllkörpern 1 ist im weiteren auch die Gefahr vermindert, dass Vögel in das Kaminrohr 2 hineinfallen und sterben. Alleine in der Schweiz kommen 10'000 Vögel durch den Fall in ein Kaminrohr um. Gegenüber den bisherigen Kaminen weist das vorgeschlagene Kamin mit Füllkörpern 1 die folgenden Vorteile auf:
In einem Kaminrohr 2 mit Füllkörpern 1 bildet sich wesentlich mehr Kondensat als in einem Kaminrohr ohne Füllkörper 1. Dies hat zur Folge, dass die Wasserdampf- und Säureemission wesentlich reduziert wird. Das Kondensat enthält neben Wasser und Säuren auch Russpartikel. Durch die Erhöhung der Kondensatmenge dank der Wirkung der vorgeschlagenen Füllkörper 1 wird also auch eine grössere Menge Russ zurückgehalten.

Die Gasmenge, welche das Kaminrohr oben verlässt ist bei Kaminrohren 2 mit Füllkörpern 1 wegen der grösseren Kondensatmenge wesentlich kleiner als bei herkömmlichen Kaminrohren. Das bedeutet, dass wesentlich weniger Wärmeenergie in die Atmosphäre gelangt. Es kann wesentlich mehr Kondensationswärme zurückgehalten werden.

Die Kondensation bewirkt, dass der Massenstrom des Rauchgases gegen das oberen Ende des Kaminrohres 2 hin ständig verkleinert wird. Es entsteht ein Unterdruck, welcher im Kaminrohr 2 einen nach oben gerichteten, gleichmässigen, sehr stabilen Zug erzeugt. Durch die Erhöhung der Kondensatmenge, kann dieser Zug nun verstärkt werden.

Ein weiterer Vorteil besteht darin, dass ein Kaminrohr 2, welches Füllkörper 1 enthält, weniger schnell auskühlt als ein Kaminrohr ohne Füllkörper 1. Dadurch kann ein Vereisen des Kaminrohrs 2 verhindert werden, wenn der Heizkessel aus irgendwelchen Gründen im Winter für eine kurze Dauer ausgeschaltet werden muss. Besonders wichtig ist diese Eigenschaft für Kamine, welche aussen an der Fassade montiert sind.

Schliesslich ist noch der Vorteil zu erwähnen, dass die Füllkörper 1 den Tod unzähliger Vögel zu verhindern vermögen.

Der Füllkörper 1 eignet sich nicht nur für den Einbau in Kaminrohre 2, sondern lässt sich überall dort einsetzen, wo gasförmige Stoffe oder Stoffgemische möglichst vollständig zur Kondensation gebracht werden sollen. Ein Anwendungsgebiet ist zum Beispiel die chemische Verfahrenstechnik. Hier können die Füllkörper 1 zum Beispiel in Reaktoren und Kolonnen eingebaut werden.

Dank seines einfachen Aufbaus ist der vorgeschlagene Füllkörper 1 kostengünstiger herstellbar. Er hat eine strömungstechnisch günstige Form, was bewirkt dass er den Massenstrom des Gases kaum bremst-. Das ist insbesondere bei Kaminrohren 2 von Bedeutung, wo ein genügend starker Zug erreicht werden muss. Schliesslich lässt sich der Füllkörper 1, falls nötig, problemlos aus einem Kaminrohr 2 entfernen.

Die Reinigung eines Kamins mit Füllkörpern 1 gestaltet sich äusserst einfach. Der Kamin braucht lediglich ein Mal im Jahr mit Wasser durchspült werden. Dies kann bewerkstelligt werden, indem der Kaminfeger durch die obere Kaminöffnung einen Eimer Wasser schüttet. Dies wird zu einem neuen Berufsbild des Kaminfegers führen.

Zusammenfassend kann gesagt werden, dass der vorgeschlagene Kamin mit Füllkörpern 1 einen wesentlichen Beitrag zum Umweltschutz leistet, indem er die Schadstoffemission und den Engergieverbrauch reduziert.

Der durch die Füllkörper 1 erhöhte Wirkungsgrad von Heizungsanlagen ist ausserdem auch wirtschaftlich interessant.

## Patentansprüche

1. Füllkörper mit einer gasdurchlässigen Gitterkonstruktion, insbesondere zur Reduzierung von Schadstoffen in Abgasen, dadurch gekennzeichnet, daß der Füllkörper (1) einen Neutralisationskörper (22) und/oder Adsorptionskörper enthält.

2. Füllkörper nach Anspruch 1, dadurch gekennzeichnet, daß der Füllkörper (1) einen zentralen Aufnahmeraum (23) für den Neutralisationskörper (22) aufweist.

3. Füllkörper nach Anspruch 2, dadurch gekennzeichnet, daß der Aufnahmeraum (23) eine halbkugelförmige Einbuchtung der Grundfläche (3) ist.

4. Füllkörper nach einem der Ansprüche 1 bis 3, dadurch gekennzeichnet, daß der Neutralisationskörper (22) Kalk ist.

5. Füllkörper nach einem der Ansprüche 1 bis 4, dadurch gekennzeichnet, daß zwei halbkugelförmige Füllkörper (1) mit einem Filmscharnier (20) verbunden sind.

6. Füllkörper nach einem der Ansprüche 1 bis 5, dadurch gekennzeichnet, daß die Gitterkonstruktion des Füllkörpers (1) eine Vielzahl voneinander beabstandeter, konzentrischer Ringe (4, 5) aufweist.

7. Füllkörper nach Anspruch 6, dadurch gekennzeichnet, daß die kreisförmigen Ringe (4, 5) des Füllkörpers (1) eine runde Grundfläche (3) des Füllkörpers (1) bilden.

8. Füllkörper nach den Ansprüchen 6 oder 7, dadurch gekennzeichnet, daß auf einem äußeren Ring (4) halbkreisförmige Rippen (8) angebracht sind, die über vertikale Streben (13) mit inneren Ringen (5) verbunden sind.

9. Füllkörper nach Anspruch 8, dadurch gekennzeichnet, daß die halbkreisförmigen Rippen (8) durch ein zylindrisches, becherförmiges Teil (6) unterbrochen sind.

10. Füllkörper nach Anspruch 5 und 9, dadurch gekennzeichnet, daß das becherförmige Teil (6) zusammen mit einer Scheibe (11) und einem Bolzen (12) die Verbindungsvorrichtung (14) bilden.

11. Füllköper nach einem der Ansprüche 8 bis 10, dadurch gekennzeichnet, daß die Streben (13) und/oder Rippen (8) einen kreuzförmigen Querschnitt aufweisen.

12. Füllkörper nach einem der Ansprüche 1 bis 11, dadurch gekennzeichnet, daß der Füllkörper (1) halbkugelförmig ist.

13. Füllkörper nach einem der Ansprüche 1 bis 12, dadurch gekennzeichnet, daß zwei Füllkörper (1) jeweils paarweise zu Kugeln (15) zusammenfügbar sind.

14. Füllkörper nach Anspruch 13, dadurch gekennzeichnet, daß zwei Füllkörper (1) mittels Verbindungsklipsen (17) zu einer Kugel (15) zusammenfügbar sind.

15. Füllkörper nach einem der Ansprüche 1 bis 14, dadurch gekennzeichnet, daß der Füllkörper (1) Verbindungsvorrichtungerr (14) aufweist, um in das Kamin- bzw. Leitungsrohr (2) aufeinandersteckbar einsetzbar zu sein.

16. Verwendung eines Füllkörpers nach einem der Ansprüche 1 bis 15, in einem Kaminrohr, dadurch gekennzeichnet, daß eine Vielzahl von Füllkörpern (1) als Schüttfüllung in das Kaminrohr (2) eingefüllt wird.

17. Verwendung eines Füllkörpers nach einer der Ansprüche 1 bis 5 in einem Leitungsrohr, wobei sich der Füllkörper (1) dem Rohrquerschnitt des Leitungsrohrs (2) bündig angepaßt ist.

## Claims

1. Filling material with a gas-permeable mesh structure intended in particular for the reduction of harmful substances in flue gases, characterized in that the filling material (1) contains a neutralization material (22) and/or an adsorption material.

2. Filling material as claimed in Claim 1, characterized in that the filling material (1) exhibits a central absorption space (23) for the neutralization material (22).

3. Filling material as claimed in Claim 2, characterized in that the absorption space (23) is a semispherical indentation in the surface (3).

4. Filling material as claimed in one or other of Claims 1 to 3, characterized in that the neutralization material (22) is lime.

5. Filling material as claimed in one or other of Claims 1 to 4, characterized in that two semispherical pieces of filling material (1) are attached with a film hinge (20).

6. Filling material as claimed in one or other of Claims 1 to 5, characterized in that the mesh structure of the filling material (1) exhibits a large number of mutually separate concentric rings (4, 5).

7. Filling material as claimed in Claim 6, characterized in that the circular rings (4, 5) of the filling material (1) impart a round surface (3) to the filling material (1).

8. Filling material as claimed in Claims 6 or 7, characterized in that semicircular ribs (8) are arranged on an outer ring (4), which are attached to inner rings (5) via vertical struts (13).

9. Filling material as claimed in Claim 8, characterized in that the semicircular ribs (8) are interrupted by a cylindrical, cupular part (6).

10. Filling material as claimed in Claims 5 and 9,
characterized in that the cupular part (6) forms the connecting device (14) together with a disc (11) and a bolt (12).

11. Filling material as claimed in one or other of Claims 8 to 10, characterized in that the struts (13) and/or ribs (8) exhibit a cross-shaped cross-section.

12. Filling material as claimed in one or other of Claims 1 to 11, characterized in that the filling material (1) is semispherical.

13. Filling material as claimed in one or other of Claims 1 to 12, characterized in that two pieces of filling material (1) are each capable of being connected together in pairs to form spheres (15).

14. Filling material as claimed in Claim 13, characterized in that two pieces of filling material (1) are capable of being connected together by means of connecting clips (17) to form a sphere (15).

15. Filling material as claimed in one or other of Claims 1 to 14, characterized in that the filling material (1) exhibits connecting devices (14) enabling it to be stacked one on top of the other inside the flue pipe or the service pipe (2).

16. Application for a filling material as claimed in one or other of Claims 1 to 15 inside a flue pipe, characterized in that a large quantity of filling material (1) is filled into the flue pipe (2) as loose filling.

17. Application for a filling material as claimed in one or other of Claims 1 to 5 inside a service pipe, characterized in that the filling material (1) is adapted to the cross-section of the service pipe (2).

## Revendications

1. Corps de remplissage avec une construction grillagée laissant passer les gaz, en particulier pour réduire les éléments nocifs des gaz d'échappement,
**caractérisé** par le fait que
le corps de remplissage (1) comporte un corps de neutralisation (22) et/ou un corps d'absorption.

2. Corps de remplissage selon la revendication 1,
**caractérisé** par le fait que
le corps de remplissage (1), comporte une chambre centrale d'admission (23) pour le corps de neutralisation (22).

3. Corps de remplissage selon la revendication 2,
**caractérisé** par le fait que
la chambre centrale d'admission (23) est une échancrure de la surface en forme d'une demi sphère.

4. Corps de remplissage selon une des revendications 1 à 3,
**caractérisé** par le fait que
le matériau du corps de neutralisation (22) est du calcaire.

5. Corps de remplissage selon une des revendications 1 ou 4,
**caractérisé** par le fait que
deux corps de remplissage (1) en forme de demi sphère sont reliés entre eux par une charnière de film (20).

6. Corps de remplissage selon la revendication 1 à 5,
**caractérisé** par le fait que
la construction grillagée du corps de remplissage (1) comporte une grande quantité de cercles concentriques (4, 5) distancés les uns des autres.

7. Corps de remplissage selon la revendication 6,
**caractérisé** par le fait que
les cercles concentriques (4, 5) du corps de remplissage (1) forment une surface de base circulaire (3) du corps de remplissage.

8. Corps de remplissage selon les revendications 6 ou 7,
**caractérisé** par le fait que
sur un cercle extérieur (4), des cannelures en forme de demi-cercles y sont placées, qui sont reliées par des étrésillons verticaux (13) avec les cercles intérieurs (5).

9. Corps de remplissage selon la revendication 8,
**caractérisé** par le fait que
les cannelures en forme de demi cercle (8) sont interrompues par une partie cylindrique en forme de gobelet (6).

10. Corps de remplissage selon les revendications 5 à 9,
**caractérisé** par le fait que
la partie en forme de gobelet (6) forme avec un disque (11) et un boulon (12) le dispositif d'assemblage (14).

11. Corps de remplissage selon les revendications 8 à 10,
**caractérisé** par le fait que
les étrésillons (13) et /ou les cannelures (8) comportent une section transversale en forme de croix.

12. Corps de remplissage selon les revendications 1 à 11,
**caractérisé** par le fait que
le corps de remplissage (1) a une forme de demi sphère.

13. Corps de remplissage selon les revendications 1 à 12,
**caractérisé** par le fait que
deux corps de remplissage (1) peuvent être mis ensemble en couple pour former une sphère (15).

14. Corps de remplissage selon la revendication 13,
**caractérisé** par le fait que
deux corps de remplissage (1) sont fixés par des pinces de liaison l'un contre l'autre pour former une sphère (15).

15. Corps de remplissage selon les revendications 1 à 14,
**caractérisé** par le fait que
le corps de remplissage (1) comporte des dispositifs de liaison (14) pour être placés les uns sur les autres dans des conduites de cheminées resp. dans des tuyauteries (2).

16. Utilisation d'un corps de remplissage selon les revendications 1 à 15 dans une conduite de cheminée,
**caractérisé** par le fait qu'une
grande quantité de corps de remplissage (1) sont déversés remplissant la conduite de cheminée (2).

17. Utilisation d'un corps de remplissage selon les revendications 1 à 5 dans une tuyauterie,
**caractérisé** par le fait que
le corps de remplissage (1) est formé de manière à s'adapter exactement au diamètre de la conduite (2).
